# EUROPÄISCHE PATENTANMELDUNG

(11) **EP 0 918 177 A1**
(43) Veröffentlichungstag der Anmeldung: **26.05.1999**
(21) Anmeldenummer: 97102521.8
(22) Anmeldetag: 17.02.1997
(51) Int. Cl.: F16H 48/10

(54) **Stirnrad-Differential**

(71) Anmelder: Höhn, Bernd-Robert, Prof. Dr. Ing., 85748 Garching (DE)
(72) Erfinder: Höhn, Bernd-Robert, Prof. Dr. Ing., 85748 Garching (DE)

(57) **Zusammenfassung**

Die Erfindung betrifft ein Stirnraddifferential (30), insbesondere für Kraftfahrzeuge, mit einem ein Ausgleichsgehäuse (32) antreibenden Antriebselement, mehreren außenverzahnten (36A,38A) und miteinder in Eingriff befindlichen Planetenrädern (36,38), die in dem Ausgleichsgehäuse (32) aufgenommen sind und mit verzahnten Abtriebsrädern (42,44) zusammenwirken, wobei zur Erzielung einer kompakten Konstruktion und zur Übertragung hoher Antriebsmomente die Abtriebsräder (43,44) mit ringförmigen Abschnitten (46,48) versehen sind, die über Innenverzahnungen mit den Planetenrädern (36,38) kämmen.

## Beschreibung

Die Erfindung betrifft ein Stirnraddifferential, insbesondere für Kraftfahrzeuge, gemäß dem Oberbegriff des Patentanspruches 1.

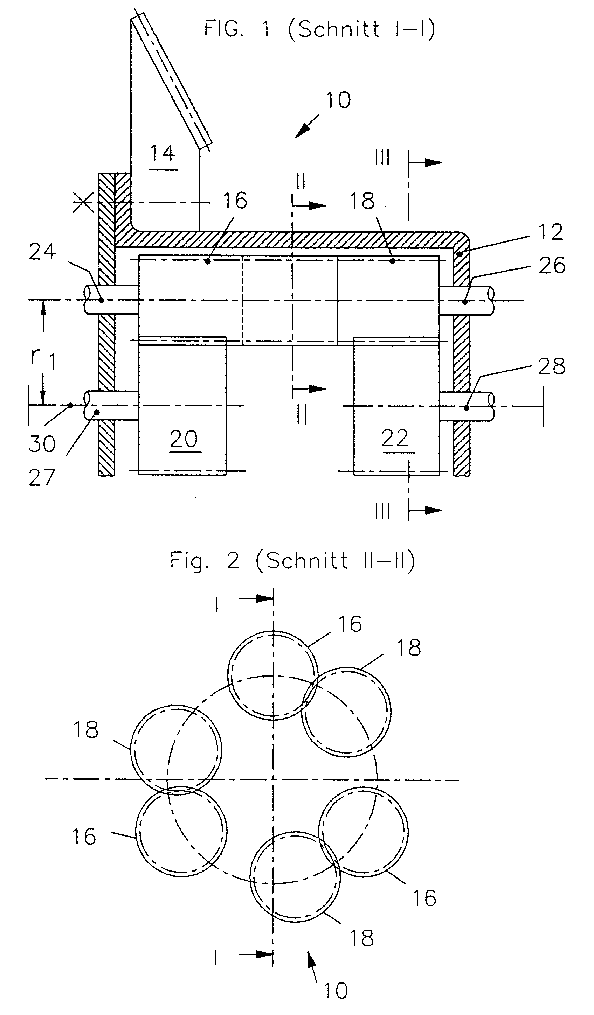

Derartige Stirnraddifferentiale, insbesondere für Kraftfahrzeuge, sind vielfach bekannt und setzen sich gemäß Fig. 1 der anliegenden Zeichnung im wesentlichen wie folgt zusammen:

Ein Antriebselement, z. B. ein Tellerrad 14, treibt ein in einem nicht dargestellten Getriebegehäuse drehbar gelagertes Ausgleichsgehäuse 12 an. In dem Ausgleichsgehäuse 12 sind mehrere Planetenräder 16,18 drehbar gelagert, die paarweise miteinander und mit außenverzahnten Abriebsrädern 20,22 in Eingriff sind. Die ebenfalls im Ausgleichsgehäuse 12 drehbar gelagerten Abtriebsräder 20,22 sind beispielsweise über Steckverzahnungen mit nicht dargestellten Antriebswellen für die angetriebenen Räder des Kraftfahrzeuges verbunden.

Wie die Fig. 1 zeigt, wird das übertragbare Drehmoment auf die Räder des Kraftfahrzeuges neben den Kriterien Zahnbreite, Geometrie, verwendeter Werkstoff, etc. wesentlich von dem mittleren Berührradius r₁ bestimmt, der somit in nicht unbeträchtlichem Maße die Kompaktheit des Differentiales bestimmt.

Aufgabe der Erfindung ist es, ein Stirnraddifferential der gattungsgemäßen Art vorzuschlagen, das bei einfacher Bauart und gegebenen Abmaßen die Übertragung höherer Drehmomente ermöglicht und das kostengünstig herstellbar ist.

Diese Aufgabe wird erfindungsgemäß mit den kennzeichnenden Merkmalen des Patentanspruches 1 gelöst. Vorteilhafte Weiterbildungen der Erfindung sind den weiteren Patentansprüchen entnehmbar.

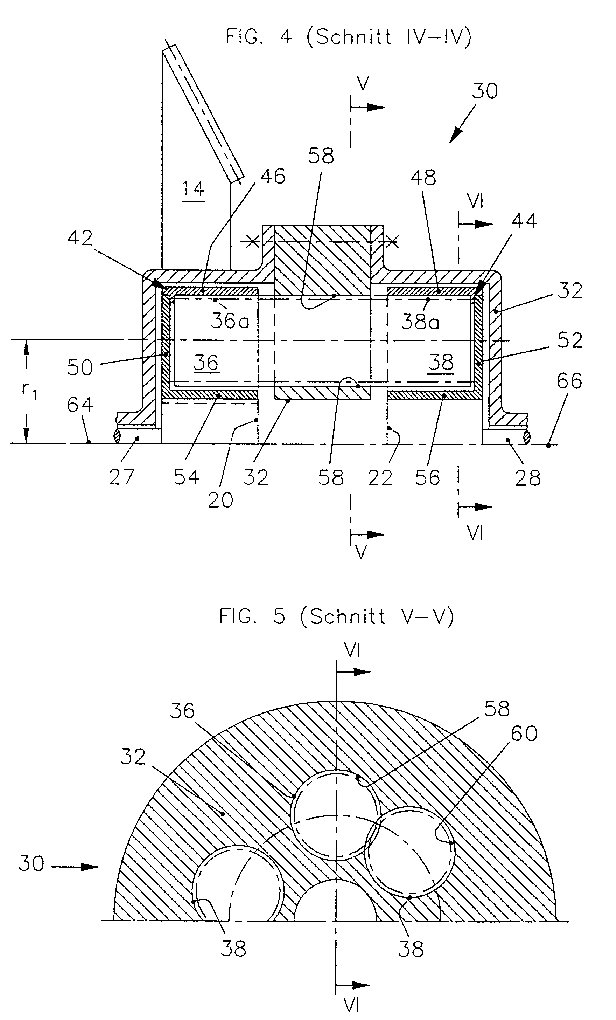

Durch die vorgeschlagene Verwendung von Abtriebsrädern mit ringförmigen Abschnitten mit Innenverzahnungen, die die Planetenräder umschließen und demzufolge radial außenliegend an deren Hüllkreisfläche angreifen, wird bei baugleichen Verhältnissen ein deutlich größerer Berührradius r₁ erzielt, der die Übertragung höherer Drehmomente ermöglicht. Der wesentliche Vorteil liegt also darin, daß bezogen auf ein vorgegebenes Bauvolumen und auf einen vorgegebenen maximalen Durchmesser die Zahneingriffsflächen auf einem wesentlich größeren Durchmesser liegen (vgl. jeweils r₁ der Fig. 1 und 4 der anliegenden Zeichnung). Bei einer maximal vorgegebenen Flächenpressung im Zahnkontakt ist das übertragbare Drehmoment im Verhältnis dieser beiden Radien deutlich größer. Andererseits kann für ein vorgegebenes Drehmoment die erfindungsgemäße Bauart kleiner und damit leichter ausgeführt werden. Für den heute angestrebten Leichtbau in der Automobiltechnik und besonders bei den drehenden Teilen der Antriebstechnik ist dies ein wesentlicher Vorteil gegenüber bekannten Differentialen. Bei gleichen Außendurchmessern ist mit dem erfindungsgemäßen Differential ungefähr das doppelte Antriebsdrehmoment übertragbar.

Bevorzugt werden die Abtriebsräder bzw. deren innenverzahnte Abschnitte auf zumindest drei umfangsmäßig verteilten Planentenrädern zentriert bzw. frei gelagert. Dies ergibt einen optimalen Lastausgleich, wobei bei entsprechender Konstruktion der einzige Bearbeitungsvorgang in dem Herstellen der Verzahnung liegt. Diese könnte mit einer Räumnadel hergestellt werden, jedoch ist bei den geforderten Qualitätsanforderungen aufgrund der geringen Relativdrehzahlen eine spanlose Herstellung günstiger, z.B. im Sinterverfahren oder durch umgeformte Blechpreßteile. Dabei ist es ferner vorteilhaft, wenn die Abtriebsräder ein- oder zweiteilig aus den ringförmigen Abschnitten mit der Innenverzahnung und aus Mitnehmerscheiben gebildet sind, die drehfest miteinander verbunden werden. Die Mitnehmerscheiben können dabei zugleich Nabenabschnitte mit Steckverzahnungen zur Verbindung mit den Abtriebswellen aufweisen.
Während die einteilige, z.B. aus Blechpreßteilen bestehende Ausführung der Abtriebsräder kostengünstiger ist, hat die zweiteilige Ausführung den Vorteil, daß die ringförmigen Abschnitte der Abtriebsräder sich auf die drei Planetenräder einstellen können und eine gleichmäßige Linienlast aufweisen und somit nicht durch die Achse der Abtriebswellen in ihrer axialen Ausrichtung vorgeprägt sind. Die drehfeste, axial jedoch verschiebliche Verbindung der ringförmigen Abschnitte mit den Mitnehmerscheiben erlaubt größere Toleranzen zwischen den Achsen der Abtriebswellen und der Drechachse der Abtriebsräder.

Die Planentenräder können bevorzugt über deren Zahnkopfflächen unmittelbar im Ausgleichsgehäuse gelagert sein. Daraus resultiert eine sehr gedrungene Bauweise des Differentiales, insbesondere in Axialrichtung. Um dabei auf der einen Seite die Reibung zwischen den Planetenrädern und dem Ausgleichsgehäuse gering zu halten und den Verschleiß in den Bohrungen zu minimieren, können die Bohrungen mit Beschichtungen (z.B. aufgedampften Härte- bzw. Karbidbeschichtungen) versehen sein.

Ggf. könnte die Verzahnung bzw. die Innenverzahnung der ringförmigen Abschnitte der Abtriebsräder und die korrespondierenden Verzahnungen der Planentenräder als Schrägverzahnungen ausgebildet sein. Dadurch entstehen bei Drehmomentübertragungen Axialkräfte, die die Räder axial im Ausgleichsgehäuse anlaufen lassen. Die hieraus entstehenden Bremsmomente führen zur einer Sperrwirkung des Differentiales, wobei der Schrägungswinkel der Verzahnung die Sperrwirkung des Differentiales entsprechend beeinflußt.

Ein Ausführungsbeispiel der Erfindung ist im folgenden mit weiteren Einzelheiten näher erläutert. Die schematische Zeichnung zeigt in
- Fig. 1: ein dem Stand der Technik entsprechendes Stirnraddifferential für ein Kraftfahrzeug in einem Teillängsschnitt entlang der Linie I - I der Fig. 2;
- Fig. 2: einen Querschnitt gemäß Linie II-II der Fig. 1;
- Fig. 3: einen weiteren Querschnitt entsprechend Linie III-III der Fig. 1;
- Fig. 4: ein Stirnraddifferential für ein Kraftfahrzeug mit Abtriebsrädern mit einer Innenverzahnung, in einem Längsschnitt entlang der Linie IV-IV der Fig. 5;
- Fig. 5: einen Querschnitt gemäß Linie V-V der Fig. 4;
- Fig. 6: einen weiteren Querschnitt entlang Linie VI-VI der Fig.. 4; und
- Fig. 7: ein Stirnraddifferential gemäß Fig. 4, jedoch mit einteiligen Abtriebsrädern.

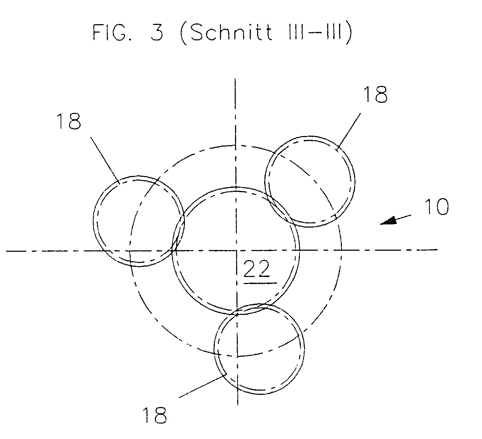

Das in den Fig. 1 - 3 gezeigte Stirnraddifferential 10 entspricht dem üblichen Stand der Technik und setzt sich im wesentlichen aus einem in einem nicht dargestellten Getriebegehäuse drehbar gelagerten Ausgleichsgehäuse 12, einem Tellerrad 14 als Antriebselement, mehreren paarweise miteinander kämmenden Planetenrädern 16,18 und aus mit Abtriebswellen 27,28 verbundenen Abtriebsrädern 20,22 zusammen.

Der Antriebsfluß verläuft vom Tellerrad 14 über das Ausgleichsgehäuse 12 und über die über Lagerzapfen 24,26 im Ausgleichsgehäuse 12 drehbar gelagerten Planentenrädern 16,18 auf die Abtriebsräder 20,22 bzw. die Abtriebswellen 27,28. Drehzahldifferenzen an den Abtriebsrädern 20,22 werden z. B. vom Abtriebsrad 20 jeweils über die Planetenräder 16,18 zum Abtriebsrad 22 ausgeglichen.

Ein wesentliches Kriterium des übertragbaren Antriebsmomentes resultiert aus dem wirksamen Berührradius r₁, der sich wie ersichtlich aus dem Teilkreisdurchmesser der außenverzahnten Abtriebsräder 20,22 ergibt und der wesentlich die Kompaktheit des Differentiales bzw. dessen radiale Ausdehnung bestimmt.

Das in den Fig. 4 - 6 dargestellte Stirnraddifferential 30 ist soweit nicht beschrieben funktionell und/oder baulich gleich und mit gleichen Bezugszeichen versehen.

Abweichend davon sind die Abtriebsräder 42,44 jedoch mit ringförmigen Abschnitten 46,48 mit durchgehenden Innenverzahnungen versehen, die radial außenliegend der durch die Planetenräder 36,38 bei deren Umlauf gebildeten Hüllkreisfläche mit der korrespondierenden Außenverzahnung 36a bzw. 38a der Planetenräder 36,38 kämmen. Daraus resultiert bei gleichen radialen Abmessungen des Ausgleichsgehäuses 32 ein nahezu verdoppelter Berührradius r₁ mit entsprechend größeren, übertragbaren Antriebsmoment.

Die ringförmigen Abschnitte 46,48 bzw. deren Innenverzahnungen greifen formschlüssig in entsprechende Außenverzahnungen von Mitnehmerscheiben 50,52, an die zur Mitte des Ausgleichsgehäuses verlaufende Nabenabschnitte 54,56 angeformt sind. Die Nabenabschnitte 54,56 weisen eine formschlüssige Welle-Naben-Verbindung mit den Abtriebswellen 27,28 zum Antrieb der Räder des Kraftfahrzeuges auf.

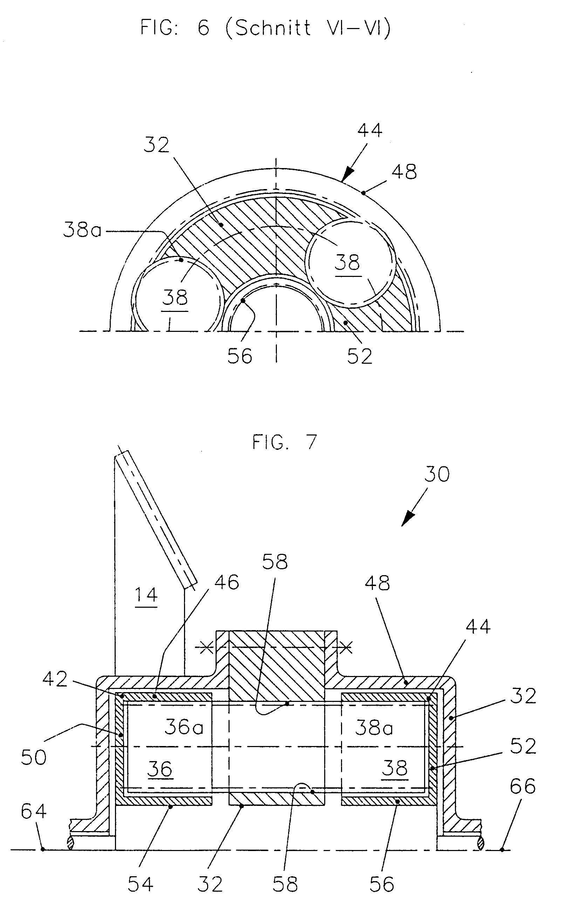

Die umfangsmäßig symmetrisch verteilten Planetenräder 36,38 (im Ausführungsbeispiel drei Paare, es sind bei hohen zu übertragenden Antriebsmomenten auch mehr Planetenräder einsetzbar) sind frei bzw. ohne die in Fig. 1 dargestellten Lagerzapfen 24,26 innerhalb des Ausgleichsgehäuses 32 gelagert, wobei die zu Lagerflächen geschliffenen Zahnkopfflächen (nicht dargestellt) der Planetenräder 36,38 in der mittleren Querschnittsebene gemäß Fig. 5 in entsprechend ausgearbeiteten, ineinander im Verzahnungsbereich verschnittenen Lagerbohrungen 58,60 des Ausgleichsgehäuses 32 gelagert sind. Diese Lagerbohrungen können beschichtet sein, um einerseits die Reibung zu reduzieren, die eine gewisse Sperrwirkung erzeugt, und um den Verschleiß zu minimieren. Als Beschichtung wird bevorzugt eine karbidische Härteschicht aufgebracht.

Andererseits sind die ringförmigen Abschnitte 46,48 der Abtriebsräder 42,44 über Ihre Innenverzahnungen frei auf den umfangsmäßig symmetrisch verteilt angeordneten Planetenrädern 36,38 bzw. deren Außenverzahnungen 36a,38a abgestützt bzw. gelagert (vgl. auch Fig. 6).

Zur kostengünstigen Herstellung des beschriebenen Stirnraddifferentiales 30 sind unter anderem die ringförmigen Abschnitte 46,48 der Abtriebsräder 42,44 im Sinterverfahren hergestellt, wobei die dabei erzielbare geometrische Genauigkeit einschließlich der Innenverzahnungen für die auftretenden Relativdrehzahlen im Ausgleichsbetrieb (z. B. beim Durchfahren des Kraftfahrzeuges von Kurven) ausreichen. Jedoch kann auch eine Herstellung der Abtriebsräder 42, 44 aus umgeformten Blechpreßteilen vorgenommen werden.

Die Planetenräder 36,38 sind ebenfalls spanlos gefertigt, z.B. im Strangpreßverfahren oder in Umformtechnik aus Blechteilen; anschließend werden lediglich die Zahnkopfflächen auf Maß und Rundheit geschliffen, um eine einwandfreie Lagerung in den Lagerbohrungen 58,60 des Ausgleichsgehäuses 32 sicherzustellen.

Das Ausgleichsgehäuse 32 schließlich kann aus Montagegründen quergeteilt und ggf. verschraubt oder verschweißt sein.

Das in der Fig. 7 dargestellte Stirnraddifferential 30 ist soweit nicht beschrieben gleich dem der Fig. 4. Abweichend davon sind jedoch die Abtriebsräder 42, 44 einteilig ausgebildet; d.h. eine Baueinheit mit den ringförmigen Mitnehmerscheiben 50, 52 und den Nabenabschnitten 54, 56. Die Abtriebsräder 42, 44 können dabei ebenfalls Sinterteile oder Blechpreßteile sein.

Sind die Verzahnungen zwischen den innenverzahnten Abtriebsrädern 42,44 und den außenverzahnten Planetenrädern 36,38 als Schrägverzahnungen ausgebildet, so kann aufgrund der auftretenden Axialkraftkomponente zwischen Mitnehmerscheiben 50,52 und den stirnseitigen Wänden des Ausgleichsgehäuses 32 eine gezielte Anpreßkraft bzw. Reibung erzeugt werden, die eine höhere definierte Sperrwirkung des beschriebenen Stirnraddifferentiales ergibt.

Das Ausgleichsgehäuse 32 kann gekapselt ausgeführt sein, wobei z.B. zwischen den Abtriebswellen 27, 28 und den entsprechenden Nabenabschnitten des Ausgleichsgehäuses 32 geeignete Dichtungen (Lippenringe, Rundschnurringe, etc.) vorgesehen sind. Auch Gehäusetrennflächen des Ausgleichsgehäuses 32 sind dann in an sich bekannter Weise flüssigkeitsdicht auszubilden.

Das Ausgleichsgehäuse 32 wird danach mit einem speziellen, zur übrigen Getriebeschmierung ( z.B. einem Hypoidgetriebeöl) unterschiedlichem, hochwertigem Schmiermittel dauerhaft befüllt, wodurch höhere Flächenpressungen und Verzahnungsdrücke unter Vermeidung sonst ggf. auftretender Pittingbildung möglich sind. Durch die beschriebene Kapselung wird dabei eine unerwünschte Vermengung der unterschiedlichen Schmiermittel vermieden. Das Schmiermittel innerhalb des Ausgleichsgehäuses 32 kann bevorzugt ein Gelenkfett (z.B. MoS₂) sein, wie es bei Antriebsgelenken (Gleichlaufgelenke, Tripodegelenke etc.) in Kraftfahrzeugen verwendet wird.

## Patentansprüche

1. Stirnraddifferential, insbesondere für Kraftfahrzeuge, mit einem ein Ausgleichsgehäuse antreibenden Antriebselement, mehreren außenverzahnten und miteinander in Eingriff befindlichen Planentenrädern, die in dem Ausgleichsgehäuse aufgenommen sind und mit verzahnten Abtriebsrädern zusammenwirken, dadurch gekennzeichnet, daß die Abtriebsräder (42,44) mit ringförmigen Abschnitten (46,48) über Innenverzahnungen mit den Planentenrädern (36,38) kämmen.

2. Stirnraddifferential nach Anspruch 1, dadurch gekennzeichnet, daß die Abtriebsräder (42,44) auf jeweils zumindest drei umfangsmäßig verteilten Planentenrädern (36,38) frei gelagert sind,

3. Stirnraddifferential nach Anspruch 1 oder 2, dadurch gekennzeichnet, daß die Abtriebsräder (42,44) zumindest zweiteilig aus ringförmigen Abschnitten (46,48) und Mitnehmerscheiben (50,52) gebildet sind, die drehfest miteinander verbunden sind.

4. Stirnraddifferential nach Anspruch 1 oder 2, dadurch gekennzeichnet, daß die Abtriebsräder (42,44) einteilig hergestellt sind und über die Innenverzahnung mit den Planetenrädern (36,38) kämmen und ferner eine Welle-Naben-Verbindung (54,56) zu den Abtriebswellen aufweisen.

5. Stirnraddifferential nach Anspruch 3, dadurch gekennzeichnet, daß die ringförmigen Abschnitte (46,48) und die Mitnehmerscheiben (50,52) über die jeweils durchgehende Innenverzahnung der ringförmigen Abschnitte (46,48) miteinander gekuppelt sind.

6. Stirnraddifferential nach einem oder mehreren der Ansprüche 1 - 5, dadurch gekennzeichnet, daß die ringförmigen Abschnitte (46,48) spanlos (z.B. im Sinterverfahren oder aus umgeformten Blechteilen) hergestellt sind.

7. Stirnraddifferential nach Anspruch 3, dadurch gekennzeichnet, daß an die Mitnehmerscheiben (50,52) Nabenabschnitte (54,56) angeformt sind, die drehschlüssig mit den Abtriebswellen verbindbar sind.

8. Stirnraddifferential nach einem oder mehreren der Ansprüche 1 - 7, dadurch gekennzeichnet, daß die Planetenräder (36,38) spanlos hergestellt, insbesondere stranggepreßt sind.

9. Stirnraddifferential nach einem oder mehreren der Ansprüche 1 - 8, dadurch gekennzeichnet, daß die Planetenräder (36,38) über deren feinbearbeitete Zahnkopfflächen in Lagerbohrungen (58,60) des Ausgleichsgehäuses (32) gelagert sind.

10. Stirnraddifferential nach Anspruch 9, dadurch gekennzeichnet, daß die Lagerbohrungen (58,60) des Ausgleichsgehäuses (32) die korrespondierenden Planetenräder (36,38) außer im Zahneingriffsbereich vollständig umschließen.

11. Stirnraddifferential nach einem oder mehreren der vorhergehenden Ansprüche, dadurch gekennzeichnet, daß die Verzahnungen zwischen den Abtriebsrädern (42,44) und den Planetenräder (36,38) Schrägverzahnungen sind.

12. Stirnraddifferential nach einem oder mehreren der vorhergehenden Ansprüche, dadurch gekennzeichnet, daß die Lagerbohrungen (58, 60) im Ausgleichsgehäuse (32) beschichtet sind.

13. Stirnraddifferential nach einem oder mehreren der vorhergehenden Ansprüche, dadurch gekennzeichnet, daß das Ausgleichsgehäuse (32) flüssigkeitsdicht gekapselt und mit einem speziellen Schmiermittel befüllt ist.

14. Stirnraddifferential nach Anspruch 13, dadurch gekennzeichnet, daß das Schmiermittel ein bei hochbelasteten Antriebsgelenken verwendetes Gelenkfett ist.
